# EUROPEAN PATENT SPECIFICATION

(11) **EP 3 187 400 B1**
(45) Date of publication and mention of the grant of the patent: **27.06.2018**
(21) Application number: 16198634.4
(22) Date of filing: 14.11.2016
(51) Int. Cl.: B62J 25/00, B62H 1/02, B62K 11/04

(54) **STRADDLED VEHICLE**
GRÄTSCHSITZFAHRZEUG
VÉHICULE À CHEVAUCHER

(30) Priority: 25.12.2015 JP 2015253667
(43) Date of publication of application: 05.07.2017
(73) Proprietor: Yamaha Hatsudoki Kabushiki Kaisha, Iwata-shi, Shizuoka 438-8501 (JP)
(72) Inventor: KIMURA, Yusuke, Iwata-shi, Shizuoka 438-8501 (JP); SUZUKI, Tomoichiro, Iwata-shi, Shizuoka 438-8501 (JP)
(74) Representative: Grünecker Patent- und Rechtsanwälte PartG mbB

(56) References cited:
- JP-A- 2006 207 571
- JP-A- 2008 190 505
- JP-U- S6 110 290
- US-A1- 2008 203 765

## Description

The present invention relates to a straddled vehicle according to the preamble of independent claim 1. Such a straddled vehicle can be taken from the prior art document JP 2008-190505 A.

Some straddled vehicles include foot frames on which a rider puts the feet. For example, a motorcycle described in Japan Laid-open Patent Application Publication No. 2015-33871 includes right and left foot frames. The right and left foot frames are provided as separate members, and are respectively attached to the right and left lateral portions of a main frame.

The aforementioned foot frames, provided as right and left separate members, have a drawback of increase in manufacturing cost due to increase in number of components and increase in number of assembling steps. By contrast, when the foot frames are provided as an integrated member, the manufacturing cost can be reduced. However, this construction has a drawback of degrading flexibility in layout of the integrated foot frame.

For example, in the motorcycle described in Japan Laid-open Patent Application Publication No. 2015-33871, a cylinder is raised from a crankcase and overlaps with the crankcase in a plan view. In this type of vehicle, the engine has a large size in the up-and-down direction. To set the lowest portion of the vehicle in as high a position as possible from the ground, the engine and an exhaust pipe are required to be disposed adjacently to each other. Therefore, when it is intended to dispose the integrated foot frame below the engine, a drawback is caused that the integrated foot frame interferes with the exhaust pipe.

Especially in recent years, many vehicles have employed a construction that a catalyst is disposed in the exhaust pipe. In this construction, the exhaust pipe is designed to have a large wall thickness to enhance efficiency in activation of the catalyst by keeping exhaust air fed to the catalyst at a high temperature. With the large wall thickness, the exhaust pipe is enlarged in outer diameter. Accordingly, flexibility in layout of the foot frame further degrades.

On the other hand, in a construction that the engine is supported from below by a vehicle body frame, the vehicle body frame is partially disposed below the engine. In this construction, flexibility in layout of the foot frame further degrades due to necessity to avoid its interference with the vehicle body frame.

It is an object of the present invention to provide a straddled vehicle that can inhibit increase in manufacturing cost and enhance flexibility in layout of a foot frame.

According to the present invention said object is solved by a straddled vehicle having the features of independent claim 1. Preferred embodiments are laid down in the dependent claims.

A straddled vehicle according to an aspect includes a head pipe, a main frame, a down frame, a fuel tank, a seat, an engine, a silencer, an exhaust pipe, a catalyst and a foot frame. The main frame includes a back-and-forth extending portion and an up-and-down extending portion. The back-and-forth extending portion extends backward from the head pipe. The up-and-down extending portion extends downward from the back-and-forth extending portion. The down frame extends downward from the head pipe. The fuel tank is supported by the main frame. The seat is disposed behind the fuel tank. The engine includes a crankcase, a cylinder and a cylinder head, and is disposed below the fuel tank. The silencer is disposed below the seat. The exhaust pipe couples the engine and the silencer. The catalyst is disposed in the exhaust pipe. The foot frame has a straight shape and extends in a vehicle width direction.

In a vehicle plan view, at least portion of the cylinder head overlaps with the crankcase. A front portion of the engine is supported by the down frame. A rear portion of the engine is supported by the main frame. The catalyst is disposed forward of the foot frame. The exhaust pipe extends backward from a front side of the engine through a lower position than the engine. The foot frame is disposed between a bottom surface of the engine and the exhaust pipe in a vehicle up-and-down direction.

The straddled vehicle according to the present aspect is provided with the foot frame straightly extending in the vehicle width direction. Hence, cost can be more reduced than a straddled vehicle provided with separate right and left foot frames. Additionally, the catalyst is disposed forward of the foot frame. Hence, the exhaust pipe disposed adjacently to the foot frame can be narrowly constructed. With this construction, the foot frame can be disposed to pass through the space between the bottom surface of the engine and the exhaust pipe. As a result, it is possible to inhibit degradation of flexibility in layout of the foot frame attributed to its integrated structure. Moreover, the front portion of the engine is supported by the down frame, whereas the rear portion of the engine is supported by the main frame. Hence, the vehicle body frame is not required to be provided with a portion for supporting the engine from below. With this construction, it is possible to prevent degradation of flexibility in layout of the foot frame attributed to its interference with the portion of the vehicle body frame.

The exhaust pipe may include a catalyst storage pipe, an upstream pipe and a downstream pipe. The catalyst storage pipe may be a member in which the catalyst is disposed. The upstream pipe may connect the engine and the catalyst storage pipe. The downstream pipe may connect the silencer and the catalyst storage pipe. The foot frame may be disposed between the bottom surface of the engine and the downstream pipe in the vehicle up-and-down direction. In this construction, flexibility in layout of the foot frame can be more enhanced than a construction that the foot frame is disposed between the bottom surface of the engine and the catalyst storage pipe.

The downstream pipe may have a smaller diameter than the upstream pipe. In this construction, the space between the bottom surface of the engine and the downstream pipe can be enlarged. Flexibility in layout of the foot frame can be thereby further enhanced.

In a vehicle side view, an upper surface of the downstream pipe may be located in a lower position than the bottom surface of the engine. In this construction, the space between the bottom surface of the engine and the downstream pipe can be enlarged. Flexibility in layout of the foot frame can be thereby further enhanced.

The crankcase may be disposed in a higher position than the downstream pipe without overlapping with the downstream pipe in the vehicle side view. In this construction, the space between the bottom surface of the engine and the downstream pipe can be enlarged. Flexibility in layout of the foot frame can be thereby further enhanced.

The bottom surface of the engine may be located in a higher position than the bottom surface of the foot frame. In this construction, the space below the bottom surface of the engine can be enlarged. Flexibility in layout of the foot frame can be thereby further enhanced.

In the vehicle side view, the foot frame may be located backward of a middle portion of the crankcase in a vehicle back-and-forth direction. In this construction, the catalyst can be easily laid out in a forward position than the foot frame. Thus, flexibility in layout of the catalyst can be also enhanced.

The catalyst may be located inward of right and left side ends of the engine in a vehicle width direction. In this construction, the catalyst can be compactly disposed.

In the vehicle side view, at least portion of the catalyst may be located forward of the crankcase. In this construction, interference between the foot frame and the catalyst can be prevented.

The foot frame may be a hollow member. In this construction, the foot frame can be produced at low cost, and this can lead to cost reduction for the straddled vehicle.

The foot frame may be a member having a columnar or prismatic shape. In this construction, the foot frame can be enhanced in stiffness at low cost, and this can lead to cost reduction for the straddled vehicle.

The foot frame may be detachably attached to the bottom surface of the engine. In this construction, even without a portion of the vehicle body frame for supporting the engine from below, the foot frame can be easily attached in position.

The straddled vehicle may further include a side stand. The foot frame may include a side stand mount to which the side stand is attached. In this construction, the position of the side stand can be changed by changing the position of the side stand mount on the foot frame. This makes it easy to tune the position of the side stand in designing the construction of the straddled vehicle.

According to the invention, the straddled vehicle further includes right and left foot steps on which feet of a rider are put. The foot frame includes a left frame portion, a right frame portion and a middle frame portion. The left frame portion is a portion to which the left foot step is attached. The right frame portion is a portion to which the right foot step is attached. The middle frame portion is disposed below the engine, and connects the left frame portion and the right frame portion. In a vehicle front view, the left frame portion, the middle frame portion and the right frame portion are aligned in line. In this construction, the foot frame has a straight shape. Hence, the path length of the foot frame can be herein shortened compared to when the foot frame has a bent shape. As a result, it is possible to reduce the weight and cost of the foot frame.

In a vehicle bottom view, the left frame portion, the middle frame portion and the right frame portion may be aligned in line. In this construction, the foot frame has a straight shape. Hence, the path length of the foot frame can be herein shortened compared to when the foot frame has a bent shape. As a result, it is possible to reduce the weight and cost of the foot frame.

### BRIEF DESCRIPTION OF THE DRAWINGS

FIG. 1 is a side view of a straddled vehicle according to a preferred embodiment.
FIG. 2 is a top view of the straddled vehicle.
FIG. 3 is a side view of a vehicle body frame.
FIG. 4 is a side view of a structure including an engine and its surroundings.
FIG. 5 is a front view of the structure including the engine and its surroundings.
FIG. 6 is a perspective view of the structure including the engine and its surroundings.
FIG. 7 is a bottom view of the structure including the engine and its surroundings.
FIG. 8 is a perspective view of a foot frame.
FIG. 9 is a top view of the foot frame.
FIG. 10 is a rear view of the foot frame.
FIG. 11 is a cross-sectional view of the foot frame.
FIG. 12 is an enlarged view of a bottom surface of the engine.

### DETAILED DESCRIPTION OF THE PREFERRED EMBODIMENTS

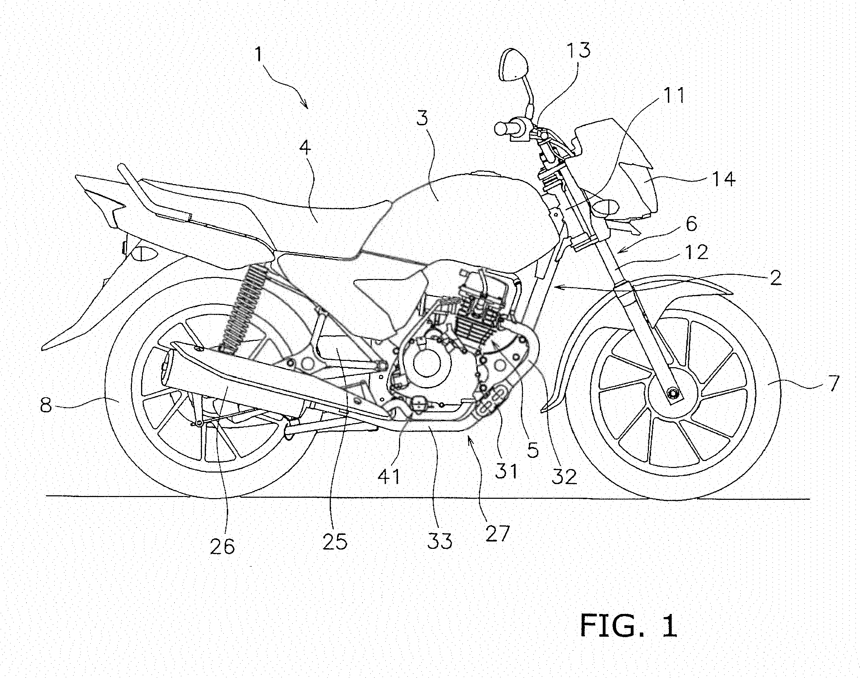

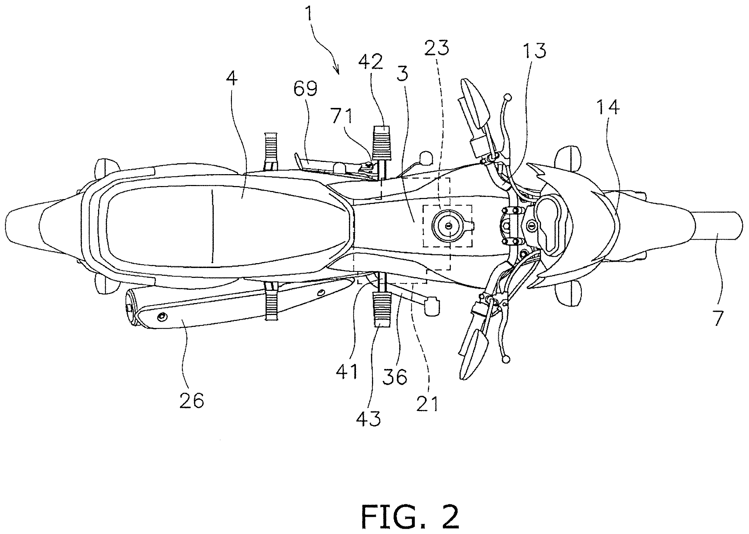

A straddled vehicle according to a preferred embodiment will be hereinafter explained with reference to drawings. FIG. 1 is a side view of a straddled vehicle 1 according to the preferred embodiment. FIG. 2 is a plan view of the straddled vehicle 1. The straddled vehicle 1 according to the present preferred embodiment is a motorcycle. As shown in FIGS. 1 and 2, the straddled vehicle 1 includes a vehicle body frame 2, a fuel tank 3, a seat 4, an engine 5, a steering device 6, a front wheel 7 and a rear wheel 8.

The vehicle body frame 2 includes a head pipe 11. The steering device 6 is supported by the head pipe 11 and is thereby turnable. The steering device 6 includes a pair of front suspensions 12. The front suspensions 12 support the front wheel 7 such that the front wheel 7 is rotatable. A handle 13 is connected to an upper portion of the steering device 6. A headlight 14 is disposed in front of the steering device 6.

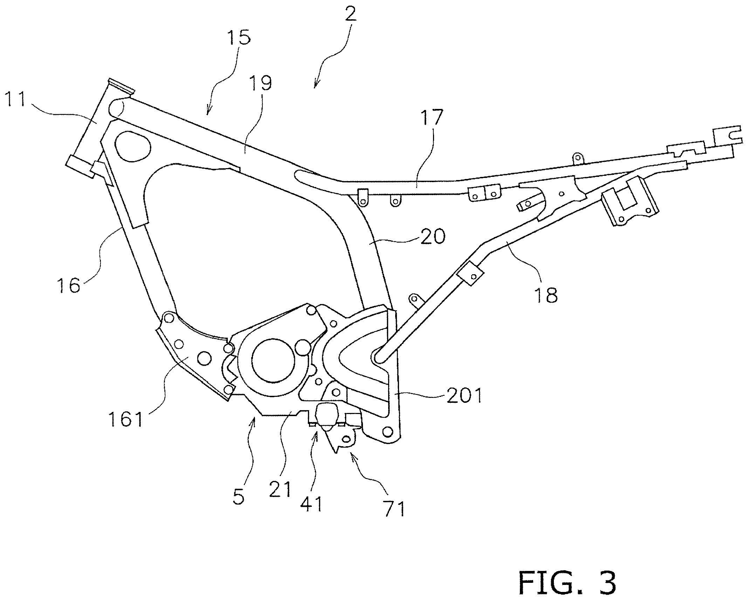

FIG. 3 is a side view of the vehicle body frame 2. As shown in FIG. 3, the vehicle body frame 2 includes a main frame 15, a down frame 16, a first rear frame 17 and a second rear frame 18. The main frame 15 is shaped to extend backward from the head pipe 11 and then bend downward. When described in detail, the main frame 15 includes a back-and-forth extending portion 19 and an up-and-down extending portion 20. The back-and-forth extending portion 19 extends backward from the head pipe 11. The up-and-down extending portion 20 extends downward from the back-and-forth extending portion 19.

It should be noted that in the present specification, a condition of a constituent element "extending in the back-and-forth direction" is not limited to a condition of the constituent element extending in parallel to the back-and-forth direction. The condition of the constituent element "extending in the back-and-forth direction" refers to a condition that the smaller of two angles formed between the horizontal direction and the extending direction of the constituent element is less than or equal to 45 degrees. In other words, the condition of the constituent element "extending in the back-and-forth direction" encompasses a condition of the constituent element extending in a direction tilting relatively to the horizontal direction. Likewise, a condition of a constituent element "extending in the up-and-down direction" is not limited to a condition of the constituent element extending in parallel to the vertical direction. The condition of the constituent element "extending in the up-and-down direction" refers to a condition that the smaller of two angles formed between the vertical direction and the extending direction of the constituent element is less than or equal to 45 degrees. In other words, the condition of the constituent element "extending in the up-and-down direction" encompasses a condition of the constituent element extending in a direction tilting relatively to the vertical direction.

The down frame 16 extends downward from the head pipe 11. The first rear frame 17 is connected to the main frame 15. The first rear frame 17 extends backward from the main frame 15. The second rear frame 18 is disposed below the first rear frame 17 and is connected to the main frame 15. The second rear frame 18 extends backward from the main frame 15, and is connected at its rear portion to the first rear frame 17.

As shown in FIG. 1, the fuel tank 3 is disposed behind the head pipe 11. The seat 4 is disposed behind the fuel tank 3. The fuel tank 3 is supported by the main frame 15. The seat 4 is supported by the first rear frame 17.

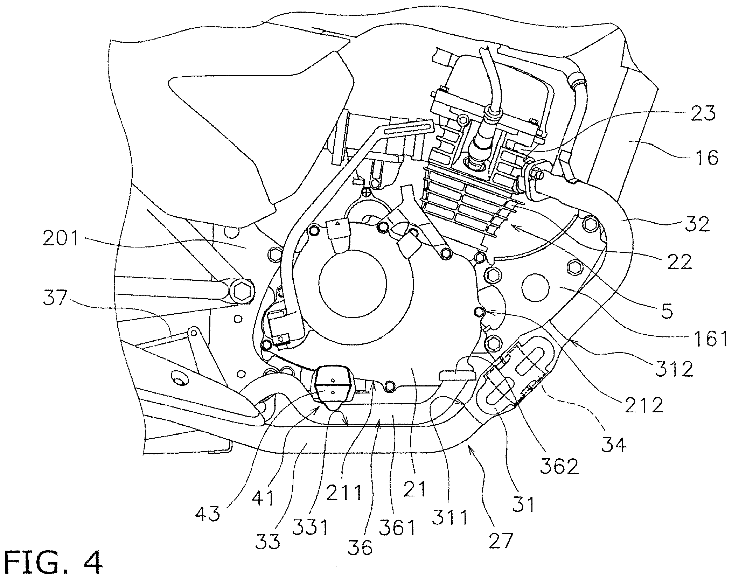

The engine 5 is disposed below the fuel tank 3. FIG. 4 is a side view of a structure including the engine 5 and its surroundings. As shown in FIG. 4, the engine 5 includes a crankcase 21, a cylinder 22 and a cylinder head 23. The cylinder 22 and the cylinder head 23 are obliquely raised up from the crankcase 21 to the front. As shown in a vehicle plan view of FIG. 2, at least portion of the cylinder head 23 overlaps with the crankcase 21.

As shown in FIG. 3, a front portion of the engine 5 is supported by the down frame 16. A rear portion of the engine 5 is supported by the main frame 15. The crankcase 21 is disposed between the lower end of the down frame 16 and the lower end of the up-and-down extending portion 20. A front portion of the crankcase 21 is supported by the lower end of the down frame 16. A rear portion of the crankcase 21 is supported by the lower end of the up-and-down extending portion 20. It should be noted that FIG. 3 illustrates only the crankcase 21 among the constituent elements of the engine 5 without illustrating the cylinder 22 and the cylinder head 23.

When described in detail, the down frame 16 includes a front bracket 161. The front bracket 161 is attached to the front portion of the crankcase 21. The up-and-down extending portion 20 includes a rear bracket 201. The rear bracket 201 is attached to the rear portion of the crankcase 21.

As shown in FIG. 1, the rear wheel 8 is disposed behind the engine 5. The rear wheel 8 is rotatably supported by a swing arm 25. The swing arm 25 is supported by the main frame 15. A silencer 26 is disposed laterally to the rear wheel 8. In this side view of the vehicle, the silencer 26 is disposed below the seat 4. The silencer 26 is connected to the engine 5 through an exhaust pipe 27. The exhaust pipe 27 extends backward from the front side of the engine 5 through a lower position than the engine 5.

As shown in FIG. 4, the exhaust pipe 27 includes a catalyst storage pipe 31, an upstream pipe 32 and a downstream pipe 33. The upstream pipe 32 is connected to a front portion of the cylinder head 23. The upstream pipe 32 extends forward from the cylinder head 23 and obliquely bends down to the rear. The upstream pipe 32 connects the engine 5 and the catalyst storage pipe 31. The catalyst storage pipe 31 stores a catalyst 34. The catalyst storage pipe 31 obliquely extends down from the upstream pipe 32 to the rear. The downstream pipe 33 extends backward from the catalyst storage pipe 31 while passing through under the engine 5. The downstream pipe 33 connects the silencer 26 and the catalyst storage pipe 31.

At least portion of the catalyst storage pipe 31 is located laterally to the front bracket 161. In other words, in the vehicle side view, at least portion of the catalyst storage pipe 31 overlaps with the front bracket 161.

At least portion of the catalyst storage pipe 31 is disposed forward of the crankcase 21. In other words, in the vehicle side view, at least portion of the catalyst 34 is located forward of the crankcase 21. At least portion of the catalyst storage pipe 31 is disposed in a higher position than a bottom surface 211 of the engine 5. In other words, in the vehicle side view, at least portion of the catalyst 34 is disposed in a higher position than the bottom surface 211 of the engine 5. What is more, the entirety of the catalyst storage pipe 31 may be located in a higher position than the bottom surface 211 of the engine 5. It should be noted that in the present preferred embodiment, the bottom surface 211 of the engine 5 is a synonym for the bottom surface of the crankcase 21.

A rear end 311 of the catalyst storage pipe 31 is located lower than the bottom surface 211 of the engine 5 and is also located backward of a front end 212 of the crankcase 21. A front end 312 of the catalyst storage pipe 31 is located higher than the bottom surface 211 of the engine 5 and is also located forward of the front end 212 of the crankcase 21.

The diameter of the catalyst storage pipe 31 is larger than that of the upstream pipe 32. The diameter of the downstream pipe 33 is smaller than that of the upstream pipe 32. The diameter of the downstream pipe 33 is smaller than that of the catalyst storage pipe 31.

In the vehicle side view, an upper surface 331 of the downstream pipe 33 is located in a lower position than the bottom surface 211 of the engine 5. The crankcase 21 is disposed in a higher position than the downstream pipe 33, and does not overlap with the downstream pipe 33 in the vehicle side view.

A rear brake pedal 36 is disposed laterally to the engine 5. The rear brake pedal 36 is connected to a rear brake (not shown in the drawings) through a link member 37. The rear brake pedal 36 includes a connecting member 361 and a tread portion 362.

The connecting member 361 is rotatably supported by the main frame 15. The tread portion 362 is connected to the connecting member 361. The tread portion 362 is located in a higher position than the bottom surface 211 of the engine 5. At least portion of the connecting member 361 is located lower than the bottom surface 211 of the engine 5. In the vehicle side view, the tread portion 362 is disposed behind the catalyst storage pipe 31. In the vehicle side view, the upper surface 331 of the downstream pipe 33 is disposed in a lower position than the connecting member 361. In the vehicle side view, at least portion of the connecting member 361 is disposed between the upper surface 331 of the downstream pipe 33 and the bottom surface 211 of the engine 5.

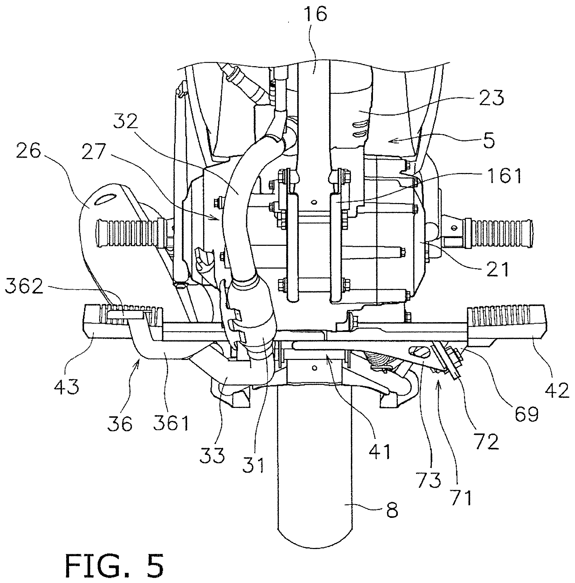

FIG. 5 is a front view of the structure including the engine 5 and its surroundings. As shown in FIG. 5, the catalyst storage pipe 31 is located inward of the right and left side ends of the engine 5 in the vehicle width direction. In other words, the catalyst 34 is located inward of the right and left side ends of the engine 5 in the vehicle width direction. In this front view of the vehicle, at least portion of the catalyst storage pipe 31 overlaps with the engine 5. When described in detail, in the vehicle front view, at least portion of the catalyst storage pipe 31 overlaps with the crankcase 21.

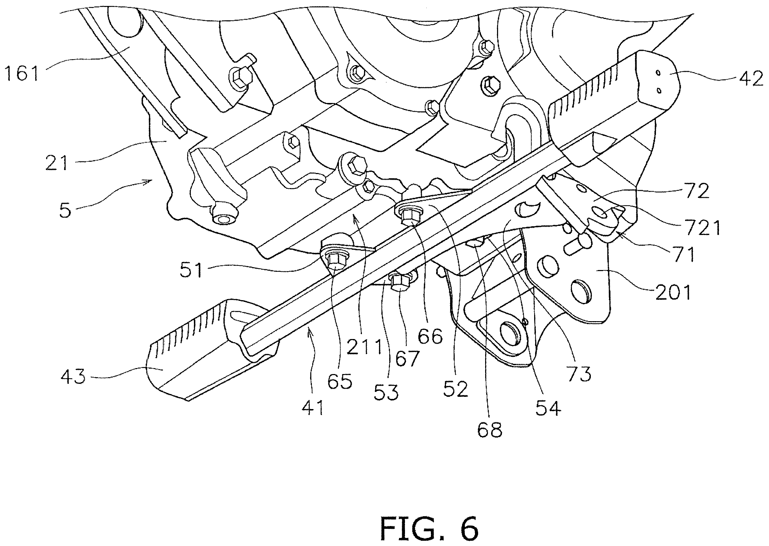

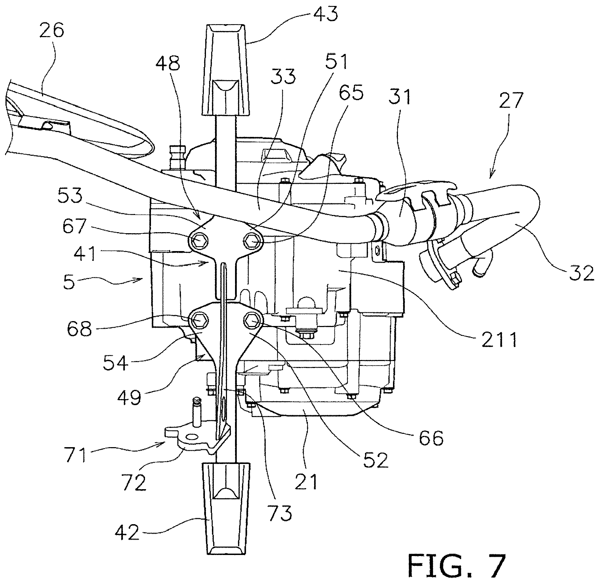

FIG. 6 is a perspective view of the structure including the engine 5 and its surroundings. FIG. 7 is a bottom view of the structure including the engine 5 and its surroundings. As shown in FIGS. 6 and 7, the straddled vehicle 1 includes a foot frame 41. Additionally, the straddled vehicle 1 includes left and right foot steps 42 and 43 on which a rider puts the feet. The foot frame 41 has a straight shape and extends in the vehicle width direction. The left and right foot steps 42 and 43 are attached to the foot frame 41.

As shown in FIG. 4, the foot frame 41 is disposed between the bottom surface 211 of the engine 5 and the exhaust pipe 27 in the up-and-down direction of the vehicle. The bottom surface 211 of the engine 5 is located in a higher position than the bottom surface of the foot frame 41. The foot frame 41 is detachably attached to the bottom surface 211 of the engine 5.

When described in detail, the foot frame 41 is disposed between the bottom surface 211 of the engine 5 and the downstream pipe 33 in the vehicle up-and-down direction. The foot frame 41 is disposed between the bottom surface 211 of the engine 5 and the connecting member 361 of the rear brake pedal 36 in the vehicle up-and-down direction. In the vehicle side view, the foot frame 41 is located backward of a middle portion of the crankcase 21 in the back-and-forth direction of the vehicle. The aforementioned catalyst 34 is located forward of the foot frame 41.

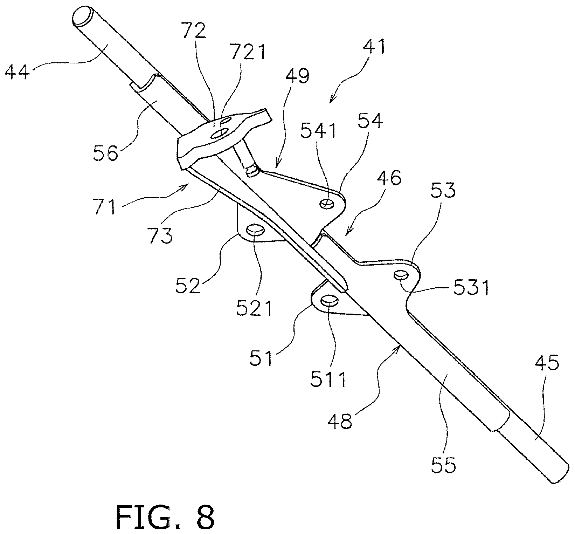

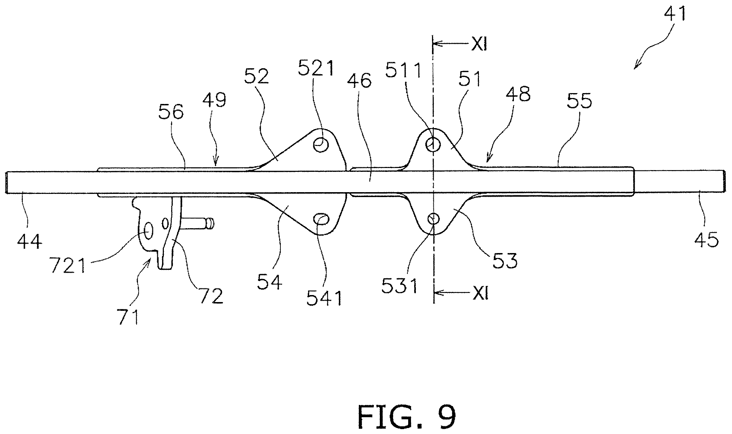

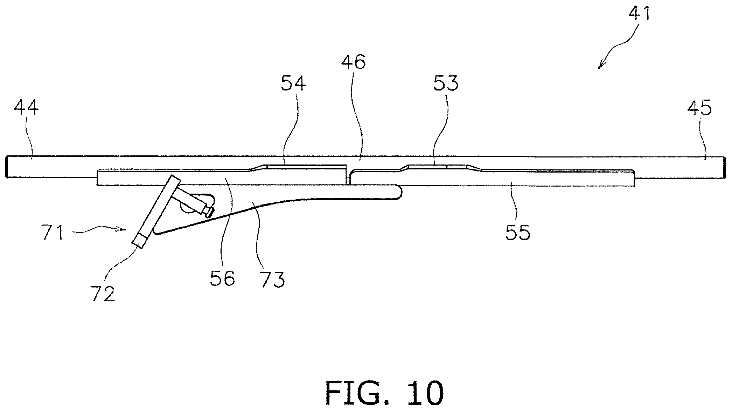

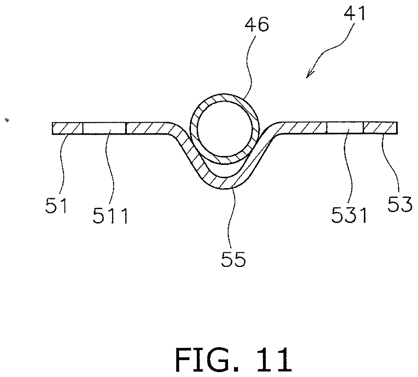

FIG. 8 is a perspective view of the foot frame 41. FIG. 9 is a top view of the foot frame 41. FIG. 10 is a rear view of the foot frame 41. FIG. 11 is a cross-sectional view of the foot frame 41 taken along line XI-XI in FIG. 9. As shown in FIG. 11, the foot frame 41 is a columnar hollow member.

As shown in FIG. 8, the foot frame 41 includes a left frame portion 44, a right frame portion 45 and a middle frame portion 46. The left foot step 42 is attached to the left frame portion 44. The right foot step 43 is attached to the right frame portion 45. The middle frame portion 46 is disposed below the engine 5 and connects the left frame portion 44 and the right frame portion 45.

The left frame portion 44 straightly extends in the vehicle width direction. The right frame portion 45 straightly extends in the vehicle width direction. The middle frame portion 46 straightly extends in the vehicle width direction. In the vehicle front view, the left frame portion 44, the middle frame portion 46 and the right frame portion 45 are aligned in line. In the vehicle bottom view, the left frame portion 44, the middle frame portion 46 and the right frame portion 45 are aligned in line.

The foot frame 41 includes a plurality of attachment portions 51 to 54. Each of the plural attachment portions 51 to 54 has a rib shape and protrudes from the middle frame portion 46 in the back-and-forth direction. The foot frame 41 is attached to the bottom surface 211 of the engine 5 through the plural attachment portions 51 to 54.

The plural attachment portions 51 to 54 are composed of a first attachment portion 51, a second attachment portion 52, a third attachment portion 53 and a fourth attachment portion 54. The first and second attachment portions 51 and 52 protrude forward from the middle frame portion 46. The first and second attachment portions 51 and 52 are disposed in alignment along the vehicle width direction. The first attachment portion 51 is provided with a hole 511, whereas the second attachment portion 52 is provided with a hole 521. The third and fourth attachment portions 53 and 54 protrude backward from the middle frame portion 46. The third and fourth attachment portions 53 and 54 are disposed in alignment along the vehicle width direction. The third attachment portion 53 is provided with a hole 531, whereas the fourth attachment portion 54 is provided with a hole 541.

When described in detail, the foot frame 41 includes a first attachment member 48 and a second attachment member 49. The first attachment member 48 includes the aforementioned first and third attachment portions 51 and 53. Additionally, the first attachment member 48 includes a first connecting portion 55. The first connecting portion 55 is disposed between the first attachment portion 51 and the third attachment portion 53, and extends along the axial direction of the middle frame portion 46. As shown in FIG. 11, the first connecting portion 55 is made in the shape of downwardly protruding curve, and is connected to the middle frame portion 46.

The second attachment member 49 includes the aforementioned second and fourth attachment portions 52 and 54. Additionally, the second attachment member 49 includes a second connecting portion 56. The second connecting portion 56 is located between the second attachment portion 52 and the fourth attachment portion 54, and extends along the axial direction of the middle frame portion 46. Similarly to the first connecting portion 55, the second connecting portion 56 is made in the shape of downwardly protruding curve, and is connected to the middle frame portion 46.

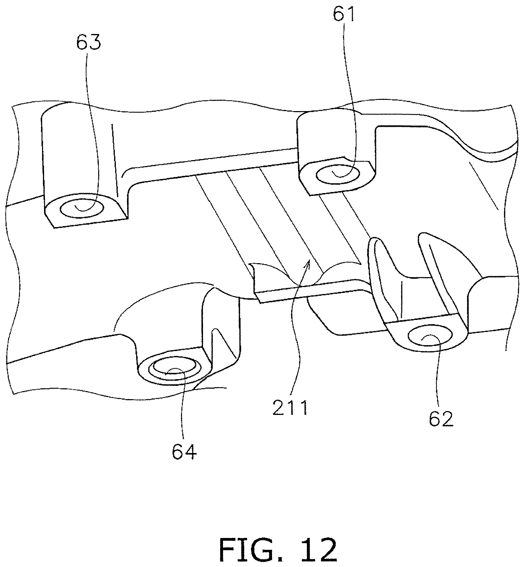

FIG. 12 is an enlarged view of the engine 5 and shows the bottom surface 211. As shown in FIG. 12, the bottom surface 211 of the engine 5 is provided with a plurality of bolt holes 61 to 64. The plural bolt holes 61 to 64 are disposed in corresponding positions to the holes 511, 521, 531 and 541 of the first to fourth attachment portions 51 to 54. As shown in FIG. 6, the foot frame 41 is fixed to the bottom surface 211 of the engine 5 by inserting the plural bolts 65 to 68 respectively into the bolt holes 61 to 64 through the holes 511, 521, 531 and 541 of the first to fourth attachment portions 54.

It should be noted that in the present preferred embodiment, the number of the attachment portions and that of the bolt holes are both four. However, the number of the attachment portions and that of the bolt holes are both not limited to four and may be both less than or greater than four.

As shown in FIGS. 2 and 5, the straddled vehicle 1 includes a side stand 69. As shown in FIGS. 8 to 10, the foot frame 41 includes a side stand mount 71. The side stand 69 is attached to the side stand mount 71. The side stand mount 71 includes a mount plate 72 and a reinforcement rib 73. The mount plate 72 is provided with a hole 721, and the side stand 69 is attached to the mount plate 72 by a bolt through the hole 721. The mount plate 72 protrudes obliquely backward from the middle frame portion 46.

The reinforcement rib 73 is connected to the mount plate 72. The reinforcement rib 73 is connected to the bottom surface of the foot frame 41, and extends along the axial direction of the middle frame portion 46. The reinforcement rib 73 is connected to and bridged between the first attachment member 48 and the second attachment member 49.

The straddled vehicle 1 according to the preferred embodiment explained above is provided with the foot frame 41 straightly extending in the vehicle width direction. Hence, cost can be more reduced than a straddled vehicle provided with separate right and left foot frames.

Additionally, the catalyst 34 is disposed forward of the foot frame 41. Hence, the exhaust pipe 27 (i.e., the downstream pipe 33) disposed adjacently to the foot frame 41 can be narrowly constructed. With this construction, the foot frame 41 can be disposed to pass through the space between the bottom surface 211 of the engine 5 and the downstream pipe 33. As a result, it is possible to inhibit degradation of flexibility in layout of the foot frame 41 attributed to its integrated structure.

Moreover, the front portion of the engine 5 is supported by the down frame 16, whereas the rear portion of the engine 5 is supported by the main frame 15. Hence, the vehicle body frame 2 is not required to be provided with a portion for supporting the engine 5 from below. With this construction, it is possible to prevent degradation of flexibility in layout of the foot frame 41 attributed to its interference with the portion of the vehicle body frame 2.

The foot frame 41 has a straight shape. Hence, the path length of the foot frame 41 can be herein shortened compared to when the foot frame 41 has a bent shape. As a result, it is possible to reduce the weight and cost of the foot frame 41.

The foot frame 41 is a hollow member. Hence, the foot frame 41 can be produced at low cost, and this can lead to cost reduction for the straddled vehicle 1. Additionally, the foot frame 41 is a columnar member. Hence, the foot frame 41 can be enhanced in stiffness at low cost, and this can lead to cost reduction for the straddled vehicle 1.

The catalyst 34 is located inward of the right and left side ends of the engine 5 in the vehicle width direction. Hence, the catalyst 34 can be compactly disposed. Additionally, in the vehicle side view, at least portion of the catalyst 34 is located forward of the crankcase 21. Therefore, interference between the foot frame 41 and the catalyst 34 can be prevented.

The foot frame 41 is detachably attached to the bottom surface 211 of the engine 5. In this case, even without a portion of the vehicle body frame 2 for supporting the engine 5 from below, the foot frame 41 can be easily attached in position.

The foot frame 41 includes the side stand mount 71 to which the side stand 69 is attached. Therefore, the position of the side stand 69 can be changed by changing the position of the side stand mount 71 on the foot frame 41. This makes it easy to tune the position of the side stand 69 in designing the construction of the straddled vehicle 1.

One preferred embodiment has been explained above. However, the present teaching is not limited to the aforementioned preferred embodiment, and a variety of changes can be made.

The number of the front wheels 7 is not limited to one, and may be plural. The number of the rear wheels 8 is not limited to one, and may be plural.

The structure of the exhaust pipe 27 may be changed. For example, the diameter of the downstream pipe 33 may be greater than or equal to that of the upstream pipe 32.

The position of the catalyst 34 may be changed. For example, the catalyst 34 may be located outward of the right and left side ends of the engine 5 in the vehicle width direction. In the vehicle side view, the entirety of the catalyst 34 may be located forward of the crankcase 21.

The structure of the foot frame 41 may be changed. For example, the foot frame 41 may be located forward of the middle portion of the crankcase 21 in the vehicle back-and-forth direction. The foot frame 41 may have a prismatic shape. Additionally or alternatively, the foot frame 41 may be a solid member.

The side stand 69 may be connected to any suitable member other than the foot frame 41. In other words, the foot frame 41 may not be provided with the side stand mount 71.

## Claims

1. A straddled vehicle, comprising:
a head pipe (11);
a main frame (15) including a back-and-forth extending portion (19) and an up-and-down extending portion (20), the back-and-forth extending portion (19) extending backward from the head pipe (11), the up-and-down extending portion (20) extending downward from the back-and-forth extending portion (19);
a down frame (16) extending downward from the head pipe (11);
a fuel tank (3) supported by the main frame (15);
a seat (4) disposed behind the fuel tank (3);
an engine (5) including a crankcase (21), a cylinder (22) and a cylinder head (23), the engine (5) being disposed below the fuel tank (3);
a silencer (26) disposed below the seat (4);
an exhaust pipe (27) coupling the engine (5) and the silencer (26);
a catalyst (34) disposed in the exhaust pipe (27); and
right and left foot steps (42,43) configured to put feet of a rider thereon, wherein
in a vehicle plan view, at least portion of the cylinder head (23) overlaps with the crankcase (21),
a front portion of the engine (5) is supported by the down frame (16),
a rear portion of the engine (5) is supported by the main frame (15),
the exhaust pipe (27) extends backward from a front side of the engine (5) through a lower position than the engine (5), **characterized by**
a foot frame (41) having a straight shape, the foot frame (41) extending in a vehicle width direction, wherein the catalyst (34) is disposed forward of the foot frame (41), the foot frame (41) is disposed between a bottom surface (211) of the engine (5) and the exhaust pipe (27) in a vehicle up-and-down direction, wherein
the foot frame (41) includes
a left frame portion (44) to which the left foot step (42) is attached,
a right frame portion (45) to which the right foot step (43) is attached, and
a middle frame portion (46) disposed below the engine (5), the middle frame portion (46) connecting the left frame portion (44) and the right frame portion (45), and
in a vehicle front view, the left frame portion (44), the middle frame portion (46) and the right frame portion (45) are aligned in line.

2. The straddled vehicle according to claim 1, **characterized in that** the exhaust pipe (27) includes
a catalyst storage pipe (31) in which the catalyst (34) is disposed,
an upstream pipe (32) connecting the engine (5) and the catalyst storage pipe (31), and a downstream pipe (33) connecting the silencer (26) and the catalyst storage pipe (31), and
the foot frame (41) is disposed between the bottom surface (211) of the engine (5) and the downstream pipe (33) in the vehicle up-and-down direction.

3. The straddled vehicle according to claim 2, **characterized in that** a diameter of the downstream pipe (33) is smaller than a diameter of the upstream pipe (32).

4. The straddled vehicle according to claim 2 or 3, **characterized in that** in a vehicle side view, an upper surface (331) of the downstream pipe (33) is located in a lower position than the bottom surface (211) of the engine (5).

5. The straddled vehicle according to any of claims 2 to 4, **characterized in that** the crankcase (21) is disposed in a higher position than the downstream pipe (33) without overlapping with the downstream pipe (33) in the vehicle side view.

6. The straddled vehicle according to any of claims 1 to 5, **characterized in that** the bottom surface (211) of the engine (5) is located in a higher position than a bottom surface of the foot frame (41).

7. The straddled vehicle according to any of claims 1 to 6, **characterized in that** in the vehicle side view, the foot frame (41) is located backward of a middle portion of the crankcase (21) in a vehicle back-and-forth direction.

8. The straddled vehicle according to any of claims 1 to 7, **characterized in that** the catalyst (34) is located inward of right and left side ends of the engine (5) in a vehicle width direction.

9. The straddled vehicle according to any of claims 1 to 8, **characterized in that** in the vehicle side view, at least portion of the catalyst (34) is located forward of the crankcase (21).

10. The straddled vehicle according to any of claims 1 to 9, **characterized in that** the foot frame (41) is a hollow member.

11. The straddled vehicle according to any of claims 1 to 10, **characterized in that** the foot frame (41) is a member having a columnar or prismatic shape.

12. The straddled vehicle according to any of claims 1 to 11, **characterized in that** the foot frame (41) is detachably attached to the bottom surface (211) of the engine (5).

13. The straddled vehicle according to any of claims 1 to 12, **characterized by:**
a side stand (69), wherein
the foot frame (41) includes a side stand mount (71) to which the side stand (69) is attached.

14. The straddled vehicle according to any of claims 1 to 13, **characterized in that** in a vehicle bottom view, the left frame portion (44), the middle frame portion (46) and the right frame portion (45) are aligned in line.

## Patentansprüche

1. Ein Spreiz-Sitz-Fahrzeug, das umfasst:
ein Kopf-Rohr (11);
einen Haupt-Rahmen (15), der einen rück-und-vor-erstreckenden Abschnitt (19) und einen oben-und-unten-erstreckenden Abschnitt (20) beinhaltet, der rück-und-vorerstreckende Abschnitt (19) erstreckt sich von dem Kopf-Rohr (11) nach hinten, der oben-und-unten-erstreckende Abschnitt (20) erstreckt sich von dem rück-und-vor-erstreckenden Abschnitt (19) nach unten;
einen Unter-Rahmen (16), der sich von dem Kopf-Rohr (11) erstreckt nach unten;
einen Kraftstoff-Tank (3), der durch den Haupt-Rahmen (15) gelagert ist;
einen Sitz (4), der hinter dem Kraftstoff-Tank (3) positioniert ist;
einen Motor (5), der ein Kurbelgehäuse (21), einen Zylinder (22) und einen Zylinderkopf (23) beinhaltet, der Motor (5) ist unterhalb des Kraftstoff-Tanks (3) positioniert;
einen Dämpfer (26), der unterhalb des Sitz (4) positioniert ist;
eine Abgas-Leitung (27), welche den Motor (5) und den Dämpfer (26) koppelt;
einen Katalysator (34), der in der Abgas-Leitung (27) positioniert ist; und
rechte und linke Fuß-Stufen (42, 43), die konfiguriert sind, um Füße eines Fahrers darauf zu setzen, wobei
in einer Fahrzeug-Draufsicht zumindest ein Teil von dem Zylinderkopf (23) mit dem Kurbelgehäuse (21) überlappt;
ein vorderer Abschnitt des Motors (5) ist durch den Unter-Rahmen (16) gelagert,
ein hinterer Abschnitt des Motors (5) ist durch den Haupt-Rahmen (15) gelagert,
die Abgas-Leitung (27) erstreckt sich von einer Vorder-Seite des Motors (5) nach hinten durch eine niedrigere Position als der Motor (5), **gekennzeichnet durch**
einen Fuß-Rahmen (41), der eine gerade Form hat, der Fuß-Rahmen (41) erstreckt sich in der Fahrzeug-Breiten-Richtung, wobei
der Katalysator (34) vor dem Fuß-Rahmen (41) positioniert ist,
der Fuß-Rahmen (41) ist zwischen einer Bodenfläche (211) des Motors (5) und der Abgas-Leitung (27) in einer Fahrzeug-Oben-und-Unten-Richtung positioniert, wobei der Fuß-Rahmen (41) beinhaltet einen linken Rahmenabschnitt (44), an welchem die linke Fuß-Stufe (42) angebracht ist,
einen rechten Rahmenabschnitt (45), an welchem die rechte Fuß-Stufe (43) angebracht ist, und
einen mittleren Rahmenabschnitt (46), der unterhalb des Motors (5) positioniert ist, der mittlere Rahmenabschnitt (46) verbindet den linken Rahmenabschnitt (44) und den rechten Rahmenabschnitt (45), und
in einer Fahrzeug-Vorder-Ansicht sind der linke Rahmenabschnitt (44), der mittlere Rahmenabschnitt (46) und der rechte Rahmenabschnitt (45) in einer Linie ausgerichtet.

2. Das Spreiz-Sitz-Fahrzeug gemäß Anspruch 1, **dadurch gekennzeichnet, dass** die Abgas-Leitung (27) beinhaltet
eine Katalysator-Aufnahme-Leitung (31), in welcher der Katalysator (34) positioniert ist,
eine Strom-Auf-Leitung (32), die mit dem Motor (5) und der Katalysator-Aufnahme-Leitung (31) verbunden ist, und
eine Strom-Ab-Leitung (33), die mit dem Dämpfer (26) und der Katalysator-Aufnahme-Leitung (31) verbunden ist, und
der Fuß-Rahmen (41) ist zwischen der Bodenfläche (211) des Motors (5) und der Strom-Ab-Leitung (33) in der Fahrzeug-Oben-und-Unten-Richtung positioniert.

3. Das Spreiz-Sitz-Fahrzeug gemäß Anspruch 2, **dadurch gekennzeichnet, dass** ein Durchmesser der Strom-Ab-Leitung (33) kleiner ist als ein Durchmesser der Strom-Auf-Leitung (32).

4. Das Spreiz-Sitz-Fahrzeug gemäß Anspruch 2 oder 3, **dadurch gekennzeichnet, dass** in einer Fahrzeug-Seiten-Ansicht eine obere Fläche (331) der Strom-Ab-Leitung (33) in einer niedrigeren Position angeordnet ist als die Bodenfläche (211) des Motors (5).

5. Das Spreiz-Sitz-Fahrzeug gemäß irgendeinem der Ansprüche 2 bis 4, **dadurch gekennzeichnet, dass** das Kurbelgehäuse (21) in einer höheren Position als die Strom-Ab-Leitung (33), ohne Überlappung mit der Strom-Ab-Leitung (33) in der Fahrzeug-Seiten-Ansicht, positioniert ist.

6. Das Spreiz-Sitz-Fahrzeug gemäß irgendeinem der Ansprüche 1 bis 5, **dadurch gekennzeichnet, dass** die Bodenfläche (211) des Motors (5) in einer höheren Position angeordnet ist als eine Bodenfläche des Fuß-Rahmens (41).

7. Das Spreiz-Sitz-Fahrzeug gemäß irgendeinem der Ansprüche 1 bis 6, **dadurch gekennzeichnet, dass** in der Fahrzeug-Seiten-Ansicht der Fuß-Rahmen (41) hinter einer Mitten-Position des Kurbelgehäuses (21) in der Fahrzeug-Rück-und-Vorder-Richtung angeordnet ist.

8. Das Spreiz-Sitz-Fahrzeug gemäß irgendeinem der Ansprüche 1 bis 7, **dadurch gekennzeichnet, dass** der Katalysator (34) innerhalb von rechten und linken Seiten-Enden des Motors (5) in der Fahrzeug-Breiten-Richtung angeordnet ist.

9. Das Spreiz-Sitz-Fahrzeug gemäß irgendeinem der Ansprüche 1 bis 8, **dadurch gekennzeichnet, dass** in der Fahrzeug-Seiten-Ansicht zumindest ein Abschnitt des Katalysators (34) vor dem Kurbelgehäuse (21) angeordnet ist.

10. Das Spreiz-Sitz-Fahrzeug gemäß irgendeinem der Ansprüche 1 bis 9, **dadurch gekennzeichnet, dass** der Fuß-Rahmen (41) ein Hohl-Element ist.

11. Das Spreiz-Sitz-Fahrzeug gemäß irgendeinem der Ansprüche 1 bis 10, **dadurch gekennzeichnet, dass** der Fuß-Rahmen (41) ein Element ist, das eine Säulen- oder Prismaform hat.

12. Das Spreiz-Sitz-Fahrzeug gemäß irgendeinem der Ansprüche 1 bis 11, **dadurch gekennzeichnet, dass** der Fuß-Rahmen (41) lösbar an der Bodenfläche (211) des Motors (5) angebracht ist.

13. Das Spreiz-Sitz-Fahrzeug gemäß irgendeinem der Ansprüche 1 bis 12,
**gekennzeichnet durch:**
einen Seiten-Ständer (69), wobei
der Fuß-Rahmen (41) eine Seiten-Ständer-Montage (71) beinhaltet, an welche der Seiten-Ständer (69) angebracht ist.

14. Das Spreiz-Sitz-Fahrzeug gemäß irgendeinem der Ansprüche 1 bis 13, **dadurch gekennzeichnet, dass** in einer Fahrzeug-Unter-Ansicht der linke Rahmenabschnitt (44), der mittlere Rahmenabschnitt (46) und der rechte Rahmenabschnitt (45) in einer Linie ausgerichtet sind.

## Revendications

1. Véhicule à chevaucher comprenant :
un tube de tête (11) ;
un cadre principal (15) comprenant une partie s'étendant vers l'avant et vers l'arrière (19) et une partie s'étendant vers le haut et vers le bas (20), la partie s'étendant vers l'avant et vers l'arrière (19) s'étendant vers l'arrière à partir du tube de tête (11), la partie s'étendant vers le haut et vers le bas (20) s'étendant vers le bas à partir de la partie s'étendant vers l'avant et vers l'arrière (19) ;
un cadre inférieur (16) s'étendant vers le bas à partir du tube de tête (11) ;
un réservoir de carburant (3) supporté par le cadre principal (15) ;
un siège (4) disposé derrière le réservoir de carburant (3) ;
un moteur (5) comprenant un carter de moteur (21), un cylindre (22) et une culasse (23), le moteur (5) étant disposé au-dessous du réservoir de carburant (3) ;
un pot d'échappement (26) disposé au-dessous du siège (4) ;
un tuyau d'échappement (27) couplant le moteur (5) et le pot d'échappement (26) ;
un catalyseur (34) disposé dans le tuyau d'échappement (27) ; et
des marchepieds droit et gauche (42, 43) configurés pour y poser les pieds d'un conducteur, dans lequel dans une vue de dessus du véhicule, au moins une partie de la culasse (23) chevauche le carter de moteur (21),
une partie avant du moteur (5) est supportée par le cadre inférieur (16),
une partie arrière du moteur (5) est supportée par le cadre principal (15),
le tuyau d'échappement (27) s'étend vers l'arrière à partir d'un côté avant du moteur (5) à travers une position inférieure à celle du moteur (5), **caractérisée par**
un cadre de pied (41) ayant une forme droite, le cadre de pied (41) s'étendant dans une direction de largeur de véhicule, dans lequel
le catalyseur (34) est disposé en avant du cadre de pied (41),
le cadre de pied (41) est disposé entre une surface inférieure (211) du moteur (5) et le tuyau d'échappement (27) dans une direction vers le haut et vers le bas du véhicule, dans lequel
le cadre de pied (41) comprend
une partie de cadre gauche (44) à laquelle est fixé le marchepied gauche (42),
une partie de cadre droite (45) à laquelle est fixé le marchepied droit (43), et
une partie de cadre médiane (46) disposée au-dessous du moteur (5), la partie de cadre intermédiaire (46) reliant la partie de cadre gauche (44) et la partie de cadre droite (45), et
dans une vue de face du véhicule, la partie de cadre gauche (44), la partie de cadre médiane (46) et la partie de cadre droite (45) sont alignées.

2. Véhicule à chevaucher selon la revendication 1, **caractérisé en ce que** le tuyau d'échappement (27) comprend
un tuyau de stockage de catalyseur (31) dans lequel le catalyseur (34) est disposé,
un tuyau amont (32) reliant le moteur (5) et le tuyau de stockage de catalyseur (31), et
un tuyau aval (33) reliant le pot d'échappement (26) et le tuyau de stockage de catalyseur (31), et
le cadre de pied (41) est disposé entre la surface inférieure (211) du moteur (5) et le tuyau aval (33) dans la direction vers le haut et vers le bas du véhicule.

3. Véhicule à chevaucher selon la revendication 2, **caractérisé en ce qu'**un diamètre du tuyau aval (33) est inférieur au diamètre du tuyau amont (32).

4. Véhicule à chevaucher selon la revendication 2 ou 3, **caractérisé en ce que** dans une vue de côté du véhicule, une surface supérieure (331) du tuyau aval (33) est située dans une position inférieure à la surface inférieure (211) du moteur (5).

5. Véhicule à chevaucher selon l'une quelconque des revendications 2 à 4, **caractérisé en ce que** le carter de moteur (21) est disposé dans une position plus haute que le tuyau aval (33) sans chevauchement avec le tuyau aval (33) dans la vue de côté du véhicule.

6. Véhicule à chevaucher selon l'une quelconque des revendications 1 à 5, **caractérisé en ce que** la surface inférieure (211) du moteur (5) est située dans une position plus haute qu'une surface inférieure du cadre de pied (41).

7. Véhicule à chevaucher selon l'une quelconque des revendications 1 à 6, **caractérisé en ce que** dans la vue de côté du véhicule, le cadre de pied (41) est situé à l'arrière d'une partie médiane du carter de moteur (21) dans une direction s'étendant vers l'avant et vers l'arrière du véhicule.

8. Véhicule à chevaucher selon l'une quelconque des revendications 1 à 7, **caractérisé en ce que** le catalyseur (34) est situé à l'intérieur des extrémités latérales droite et gauche du moteur (5) dans une direction de largeur du véhicule.

9. Véhicule à chevaucher selon l'une quelconque des revendications 1 à 8, **caractérisé en ce que** dans la vue de côté du véhicule, au moins une partie du catalyseur (34) est située en avant du carter de moteur (21).

10. Véhicule à chevaucher selon l'une quelconque des revendications 1 à 9, **caractérisé en ce que** le cadre de pied (41) est un élément creux.

11. Véhicule à chevaucher selon l'une quelconque des revendications 1 à 10, **caractérisé en ce que** le cadre de pied (41) est un élément ayant une forme en colonne ou prismatique.

12. Véhicule à chevaucher selon l'une quelconque des revendications 1 à 11, **caractérisé en ce que** le cadre de pied (41) est fixé de manière détachable à la surface inférieure (211) du moteur (5).

13. Véhicule à chevaucher selon l'une quelconque des revendications 1 à 12, **caractérisé par** :
une béquille latérale (69), dans lequel
le cadre de pied (41) comprend une monture de béquille latérale (71) à laquelle est fixée la béquille latérale (69).

14. Véhicule à chevaucher selon l'une quelconque des revendications 1 à 13, **caractérisé en ce que** dans une vue de dessous du véhicule, la partie de cadre gauche (44), la partie de cadre médiane (46) et la partie de cadre droite (45) sont alignées.
